# EUROPEAN PATENT SPECIFICATION

(11) **EP 0 919 791 B1**
(45) Date of publication and mention of the grant of the patent: **26.01.2005**
(21) Application number: 98309781.7
(22) Date of filing: 30.11.1998
(51) Int. Cl.: G01D 11/28, G12B 11/00, B60Q 3/04

(54) **Light guide type display apparatus**
Anzeigeapparat mit Lichtleitern
Appareil d'affichage à guidage de lumière

(30) Priority: 29.11.1997 GB 9725240
(43) Date of publication of application: 02.06.1999
(73) Proprietor: Ford Motor Company Limited, Brentwood, Essex CM13 3BW (GB); Ford-Werke Aktiengesellschaft, 50735 Köln (DE); Groupe Ford France S.A., 92506 Rueil Malmaison Cedex (FR)
(72) Inventor: Atkins, Richard Keith, Chelmsford, Essex (GB); Andrews, Lee Allan, Hockley, Essex SS5 4SN (GB)
(74) Representative: Messulam, Alec Moses

(56) References cited:
- EP-A- 0 110 063
- DE-A- 3 300 271
- PATENT ABSTRACTS OF JAPAN vol. 096, no. 006, 28 June 1996 & JP 08 043144 A (YAZAKI CORP), 16 February 1996

## Description

This invention relates to a light guide arrangement for guiding illumination to parts of a display panel, for example the dials on a vehicle instrument panel.

The illumination of a vehicle display panel requires clear and even illumination, both across the face of the dial(s) and also along the dial pointer. At the same time, the features used to conduct light to the correct parts of the display should not create visible shadows on the dial graphics and should be capable of being manufactured in a low-cost, efficient manner and they should not add weight to the structure.

USA Patent No. 4,899,260, U.S. Philips Corporation, dated 6 February 1990 describes a body of a material as clear as glass arranged behind the parts to be illuminated. Light beams pass from at least one illumination source to the areas to be illuminated. The body reflects the beams by deflection at reflection surfaces to the individual areas to be illuminated. The optical conductor body (1) includes a plate (1) with a substantially planar surface, openings (7, 8, 9) extending transversely through the plate (1), the walls (7a, 8a, 9a) of these openings extending at right angles to the central plane (5) of the plate at an acute angle to the course of the light beams and having reflection surfaces. The light beams are passed parallel to the central plane (5) of the plate within the plate, the light beams being reflected into recesses provided as output areas and being reflected out of these recesses by means of reflection surfaces (10b) inclined with respect to the central plane (5) of the plate.

EP 0 110 063, Kienzle Apparate GmbH, describes an arrangement for light transmission illumination of the display means of a measuring instrument having at least one light source (19) arranged in the interior of the measuring instrument and a disc-shaped photo-conductive body (8) associated with the light source (19) and substantially corresponding to the outlines of a scaled and numbered dial (7) of the display means of the measuring instrument, this photo-conductive body serving to guide light into at least one light-conductive pointer (1), whereof the shaft (18) penetrates the photo-conductive body (8), characterized in that there are provided, between the region of the photo-conductive body (8) adjacent to the light source (19) and the opening (17) serving for penetration by the pointer shaft (18), slits (25, 26) whereof light-deflecting surfaces form a light channel in the photo-conductive body (8), the substantially mutually parallel slits (25, 26) lying on either side of an imaginary plane which is perpendicular to the photo-conductive body (8) and is determined by the light source (19) and the pointer shaft (18).

EP 0 111 622 VDO, Adolf Schindling, describes an illuminating device for a dial (2) made of a transparent material with a light-reflecting surface (4) constructed along the perimeter of the dial and inclined in relation to the plane of the dial to deflect into the dial the light rays from a light source (1) positioned behind the plane of the dial, characterized in that the dial (2) is constructed with a hollow-cylindrical light-conducting edge (3) which extends from the light reflecting surface (4) and which has input surfaces (7) to input the light from the light source (1) into the light-conducting edge (3) in the circumferential direction, the light-conducting edge (3) having a decreasing height as it extends from the input surfaces (7), and the face of the light-conducting edge (3) facing away from the dial (2) being constructed as a reflection surface (5) which deflects to the light-reflecting surface (4) the light rays passing in the circumferential direction in the light-conducting edge (3).

Germany OLS DE 33 00 271 A1, VDO Schindling, describes an arrangement wherein light from a single light source passes into a light-conducting disc (1). This light is divided into two oppositely directed beam paths by means of a light divider (10). This light divided into two beam paths is supplied by deflection surfaces (13, 14; 15, 16) in the light-conducting disc (1) from opposite directions to a central light supply device (2). From the light supply device (2), the light passes into the pointer or the pointers of the indicating device.

According to the invention, there is provided a light guide arrangement as defined in claim 1.

The converging facets are able to divert light which would otherwise travel past the aperture, without contributing to the pointer illumination, into the aperture. This can result in increased pointer illumination and/or a reduced specification for the light source.

The converging facets can be the edges of slots formed through the material of the plate. In this way, no extra material has to be added to the plate; indeed material is removed, contributing in a small way to weight reduction. Alternatively the converging facets can be formed by grooves which do not extend entirely through the material of the plate but which have a reflecting face extending a substantial distance through the material of the plate, to reflect light towards pointer illumination apertures.

Preferably the first side of the plate is covered with a coverlay which has some translucent areas and some opaque areas, and the converging facets are all located behind opaque areas of the coverlay. Any non-uniformity of illumination over the area of the plate and resulting from the presence of the facets will then be hidden from the front face of the display.

It is preferred to have two pairs of converging facets, both of which converge towards the aperture from different directions to concentrate light from two different light sources towards the aperture.

The converging facets are curved with their concave sides facing one another. In one embodiment, the converging facets are formed by two opposite ends of a single slot formed through the material of the plate.

Preferably the plate has a pair of slots formed through its thickness to form surfaces at which light travelling within the plate is totally internally reflected within the plate, wherein the respective slots of said pair converge towards the aperture to concentrate light incident between the converging facets towards the aperture.

The invention will now be further described, by way of example, with reference to the accompanying drawings, in which:
Figure 1 is a front view of an instrument display for use in a motor vehicle;
Figure 2 is a schematic perspective view of the display of Figure 1;
Figure 3 is a section through a small part of the display of Figures 1 and 2;
Figure 4 is a detail view of one face of a display plate in accordance with the invention;
Figure 5 is a cross-section through the display plate of Figure 4, on the line V-V;
Figure 6 is a section through a small part of a display, showing a further feature of the invention;
Figure 7 is a perspective view of the back of a display, showing an embodiment not forming part of the present invention; and
Figure 8 is a perspective view of the back of a display, showing yet another feature of the invention; and
Figure 9 is a plan view of a vehicle speedometer dial incorporating features of the invention.

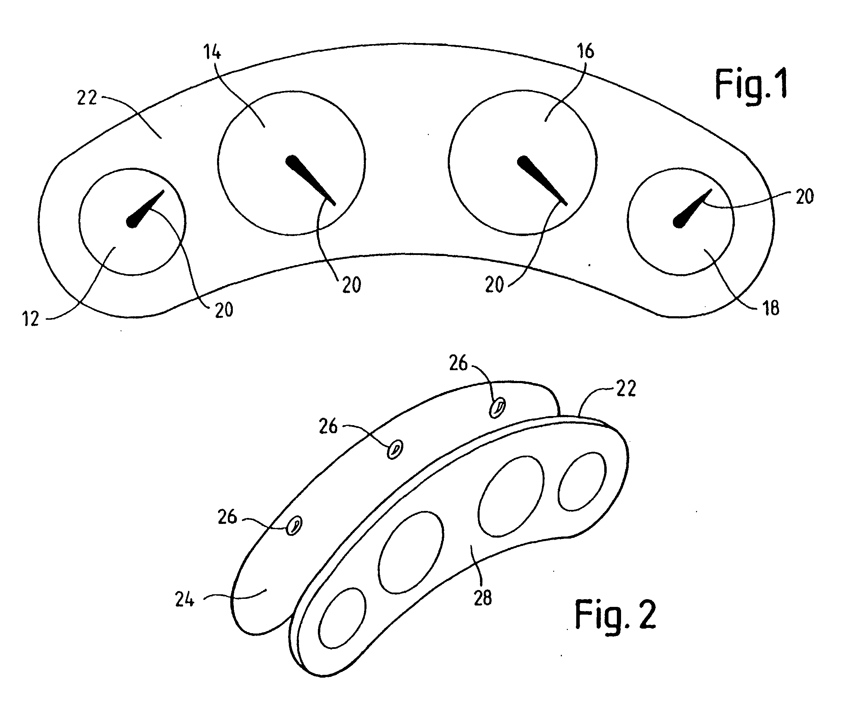

Figure 1 shows part of an instrument cluster 10 which comprises a dial plate 22 on which dials 12, 14, 16 and 18 are positioned. For example the dials may represent fuel level, tachometer, speedometer and coolant temperature in a motor vehicle but it is to be understood that the invention is not limited to application to these particular functions and indeed is not limited to use in a motor vehicle.

In use the dial plate 22 will be mounted in a backplate 24 and behind a housing or mask (not shown). The backplate carries various electronic components and additionally carries light sources for the illumination of the plate 22. Three light sources are shown by way of example at 26, these light sources being in the form of light bulbs or LED's. Other forms of illumination are however possible.

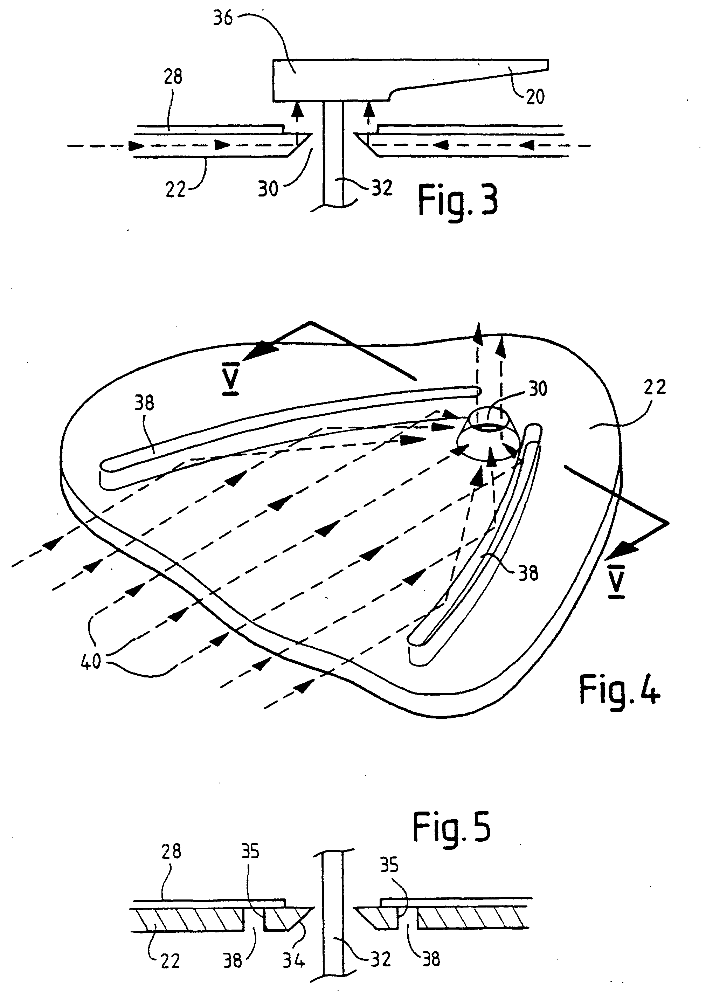

The dial plate 22 consists of a moulded plastics plate of a transparent, light-transmitting material for example polycarbonate. The plate will be moulded to incorporate facets and light pipes, in the manner to be described below. The front face of the dial plate 22 will be covered with a coverlay 28 (see Figure 3) which carries the graphics for the dial display. Large areas of the coverlay will be opaque, but some areas will be transparent, in particular the index markings around the periphery of each dial, and the index numbers associated with the index markings. When the dial plate 22 is illuminated from behind, the opaque parts of the dial will remain dark, but the translucent areas (ie the graphics) will be illuminated by transmitted light.

The plate 22 has apertures 30 through which a spindle 32 of a pointer 20 can pass. The edges of the plate 22 which surround the opening 30 are formed at an angle as can be seen in Figure 3 and the coverlay 28 stops short of the edge of the top plate of the plate 22 so that light can be reflected by the angled facets 34 up to the underside of the hub 36 of the pointer 20. The angle of the facets 34 will depend on the thickness of the plate 22, but typically will be about 45°. The hub 36 will be of sufficiently large diameter, and sufficiently close to the plate 22 so that light does not leak out from between the hub and the coverlay 28. In other words the diameter of the hole in the coverlay will be less than the diameter of the hub 36.

In Figure 3 and the other drawings, light paths are indicated by dotted lines.

Figure 4 shows a section of a plate 22 with a hole 30 for a gauge spindle. The plate 22 is formed with a pair of slots 38 which extend right through the thickness of the plate 22 and which converge towards the position of the aperture 30 for a dial pointer gauge spindle.

Incoming light is indicated by dotted lines at 40. All the light which enters the mouth between the slots 38 will either pass directly to the pointer spindle or, if it impinges on an edge of one of the slots 38, then the light will be internally reflected across the gap between the slots, until the light reaches the edge of the pointer gauge spindle aperture 30.

Figure 5 shows a cross section on the line V-V, with the slots 38 shown either side of the aperture 30 and the facets 34. In fact it is the inner faces 35 of the slots 38 which provide facets by which incident light is internally reflected within the plate 22, and the light bounces backwards and forwards between the two slots 38 until it reaches the aperture 30.

The slots 38 are, curved with their concave surfaces facing one another.

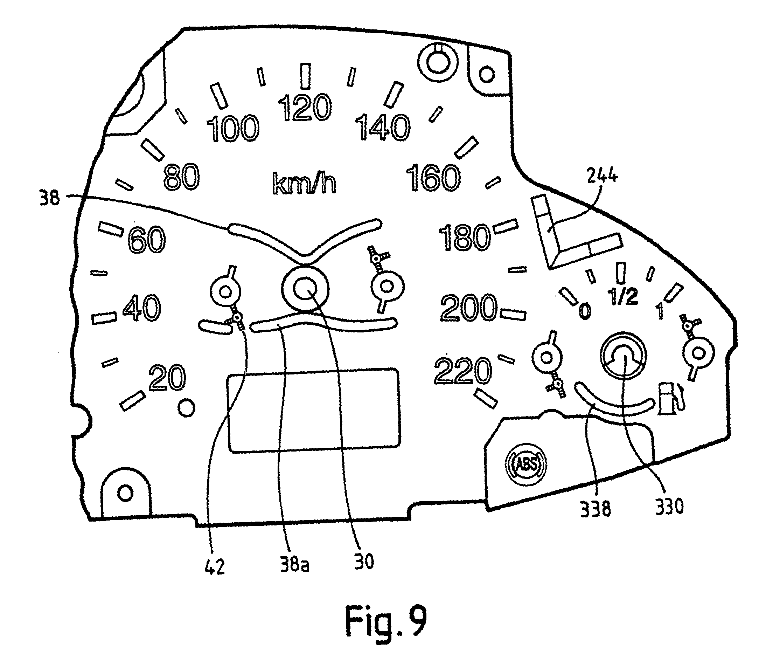

In Figure 9, one of the slots 38a is interrupted at 42, because another feature (in this case, a gauge mounting boss) occupies the position where the slot would otherwise be formed. A small amount of captured light may be lost through the gap 42, but the amount of light lost will not be significant.

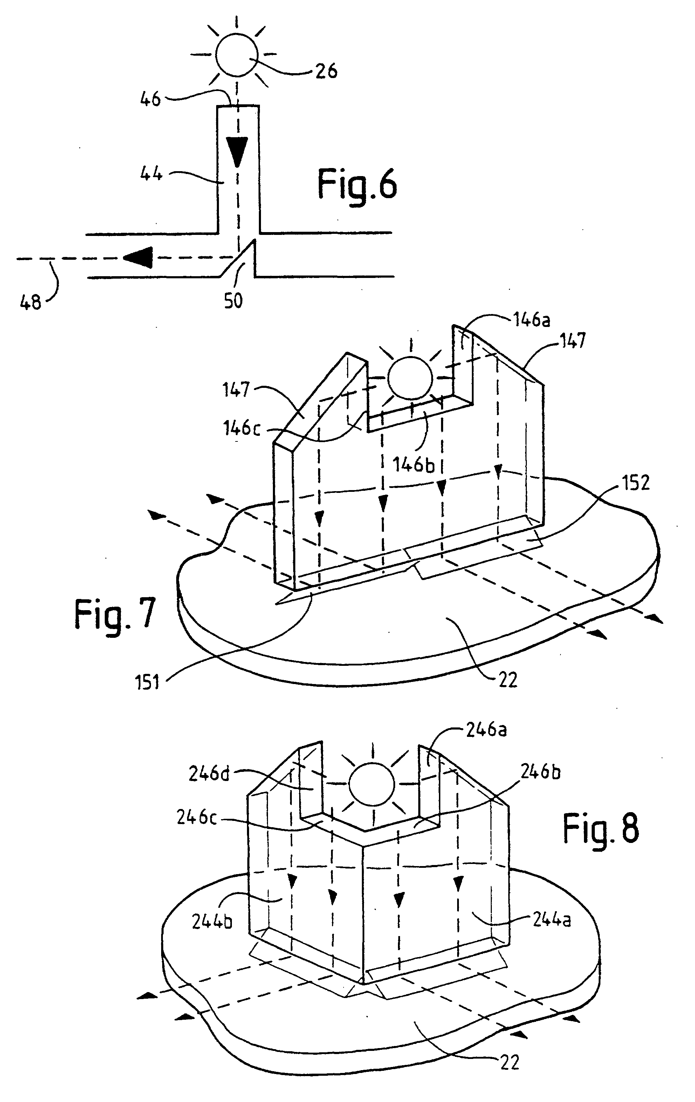

Figure 6 shows one type of light pipe at 44, for introducing light into a dial plate 22. The light pipe 44 is a rectangular section upstand from the back face of the plate 22, and has a top edge surface 46 which will be perpendicular to at least some of the light being produced by a light source 26. Light which strikes the surface 46 at right angles to the surface or close to this orientation will be directed through the pipe as indicated by the dotted lines 48, and when the light reaches the plate 22 itself it will be incident on a moulded in facet 50 by means of which the light will be directed, in this case, to the left where there will be an aperture 30 for a dial pointer where illumination will be required. This feature can be achieved with simple low cost tooling which requires no side coring.

Figure 7 shows the back face of a dial plate in an embodiment not forming part of the present invention, which illustrates an extension of this principle. In this case, the light pipe 144 has a U-shaped recess 145 within which the light source 26 is positioned. The recess 145 therefore has three separate walls 146a, 146b and 146c which can receive perpendicular rays of light, and the paths taken by those lights within the light pipe 144 are indicated by dotted lines. It will be noted that the top surface of the pipe 144 has angled shoulders 147 to internally reflect the light entering through faces 146a and 146c. At the bottom, where the pipe 144 meets the plate 22 there are two opposite angle facets 151 and 152. The facet 151 will divert light striking it in a direction behind the pipe 144, whereas the facet 152 will direct light forward. Thus a feature produced in one piece from simple low cost tooling can reflect light to two different pointer receiving faces.

Figure 8 shows an arrangement where one light pipe 244 is designed so that it can direct light into directions at 90° to one another. The pipe 244 consists of two walls 244a and 244b at right angles to one another, with light receiving faces 246a, 246b, 246c and 246d. The way in which light is transmitted through these faces is indicated by dotted lines. When the light reaches the plate 22, it can be diverted by a facet similar to facets 50, 151 and 152 either forward of the respective wall 245a, 245b or backwards.

Figure 9 shows part of a speedometer dial constructed in accordance with the invention. In this drawing, components which have been described with reference to previous drawings bear the reference numerals used in those earlier drawings.

Light from a source not shown and to the left of the drawing of Figure 9 will be received within the left hand converging slots 38, 38a.

Light from the left hand wall of the light pipe 244 will be received in the right hand pair of slots 38.

Light from the lower wall of the pipe 244 will be received in an aperture 330 for a fuel gauge, and in this instance, an additional slot 338, similar to 38 of Figure 4 will be made through the material of the plate, to collect stray light which passes the aperture 330 and to reflect that light back to the aperture.

The features described here, alone or in combination, allow the construction of a dial plate for an instrument panel in a low cost efficient manner with excellent light redirection facilities. The features described can be achieved using low cost, simple tooling.

It is to be noted in all embodiments that light from the light sources 26 which does not enter a light pipe becomes available to act as back illumination for the non opaque parts of the coverlay.

## Claims

1. A light guide arrangement for illuminating pointers on a display panel, the arrangement comprising a moulded, translucent plate (22) having a first side which forms a support for the display panel (28) and a second side, at least one pointer (20) mounted on a spindle (32) passing through an aperture (30) in the plate, the pointer having light receiving faces facing towards the first side of the plate and adapted to receive light to illuminate the pointer, the edges of the aperture having angled facets (34) arranged to direct light into the pointer light receiving faces, and means remote (46, 146, 246) from the aperture for introducing light into the translucent plate (22) the means for introducing light comprising light pipes (44) moulded onto the second side of the translucent plate (22), at least one of the light pipes having light receiving faces (146, 246) in more than one plane and light transmitting channels in more than one plane, the plate (22) having between the first and second sides at least one pair of converging facets (38) which converge towards the aperture (30) to concentrate light incident between the converging facets (38) towards the aperture, wherein the converging facets (38) are curved with their concave sides facing one another.

2. An arrangement as claimed in Claim 1, wherein the converging facets are the edges of slots (38) formed through the material of the plate (22).

3. An arrangement as claimed in Claim 1, wherein the converging facets (38) are formed within the material of the plate (22).

4. An arrangement as claimed in any preceding claim, wherein the first side of the plate is covered with a coverlay (28) which has some translucent areas and some opaque areas, and the converging facets (38) are all located behind opaque areas of the coverlay.

5. An arrangement as claimed in any preceding claim, wherein two pairs of converging facets (38) are provided, converging towards the aperture (30) from different directions to concentrate light from two different light sources towards the aperture.

6. An arrangement as claimed in Claim 5, wherein the two pairs of converging facets are provided by two slots (38) which each extend on opposite sides of the aperture and approach each other as they approach the position of the aperture (30) from either side.

7. An arrangement as claimed in any preceding claim, including at least two pointers mounted on spindles (32) passing through apertures (30) in the plate, each pointer having light receiving faces facing towards the first side of the plate and adapted to receive light to illuminate the pointer, wherein light from a single light source is directed in a first direction towards a first pointer and in a second direction towards a second pointer.

8. An arrangement as claimed in any preceding claim, wherein the converging facets comprise a pair of slots (38) formed through the thickness of the plate (22) to form surfaces at which light travelling within the plate (22) is totally internally reflected within the plate (22) and wherein the slots (38) are curved relative to a point on the plate (22), so that light reflected from different parts along the length of the slots is directed to that point.

9. An arrangement as claimed in Claim 8, wherein the slots (38) are arranged relative to a point on the plate, so that light reflected from different slots, or from different parts along the length of one slot, is directed to that point.

## Patentansprüche

1. Eine Lichtführungsanordnung zur Beleuchtung von Zeigern auf einer Anzeigtafel, wobei die Anordnung eine in Form hergestellte, durchscheinende Platte (22) umfaßt, die eine erste Seite besitzt welche einen Träger für die Anzeigetafel (28) bildet, und eine zweite Seite ; mindestens einen auf einer durch eine Öffnung (30) in der Platte hindurchreichenden Spindel (32) montierten Zeiger (20), wobei der Zeiger auf die erste Seite der Platte hin weisende, Licht empfangende Flächen besitzt, die angepaßt sind um Licht zu empfangen um den Zeiger zu beleuchten, wobei die Kanten der Öffnung gewinkelte Facetten (34) aufweisen, die angeordnet sind um Licht in die Licht empfangenden Flächen des Zeigers zu lenken; und von der Öffnung entfernte Vorrichtungen (46, 146, 246), um Licht in die durchscheinende Platte (22) einzubringen, wobei die Vorrichtungen zur Einbringung von Licht an die zweite Seite der durchscheinenden Platte (22) angeformte Lichtleiter (44) umfaßt, wobei mindestens einer der Lichtleiter Licht empfangende Flächen ( 146, 246) in mehr als einer Ebene aufweist; und Licht übertragende Kanäle in mehr als einer Ebene der Platte (22), die zwischen den ersten und zweiten Seiten mindestens ein Paar aufeinander zulaufender Facetten (38) aufweist, welche auf die Öffnung (30) hin aufeinander zulaufen, um zwischen den aufeinander zulaufenden Facetten (38) einfallendes Licht zu der Öffnung hin zu konzentrieren; und worin die aufeinander zulaufenden Facetten (38) mit ihren konkaven Seiten einander zuweisend gebogen sind.

2. Eine Anordnung wie in Anspruch 1 beansprucht, in der die aufeinander zulaufenden Facetten die Kanten von durch das Material der Platte (22) hindurch gebildeten Schlitzen (38) sind.

3. Eine Anordnung wie in Anspruch 1 beansprucht, in der die aufeinander zulaufenden Facetten (38) innerhalb des Materials der Platte (22) gebildet sind.

4. Eine Anordnung wie in einem der vorstehenden Ansprüche beansprucht, in der die erste Seite der Platte mit einer Deckschicht (28) bedeckt ist, welche einige durchscheinende Bereiche und einige lichtundurchlässige Bereiche aufweist, und in der die aufeinander zulaufenden Facetten (38) alle hinter lichtundurchlässigen Bereichen der Deckschicht angeordnet sind.

5. Eine Anordnung wie in einem der vorstehenden Ansprüche beansprucht, in der zwei Paare von aufeinander zulaufenden Facetten (38) bereitgestellt werden, die in Richtung der Öffnung (30) von verschiedenen Richtungen aufeinander zulaufen, um Licht von zwei verschiedenen Lichtquellen auf die Öffnung hin zu konzentrieren.

6. Eine Anordnung wie in Anspruch 5 beansprucht, in der die beiden Paare von aufeinander zulaufenden Facetten durch zwei Schlitze (38) bereitgestellt werden, welche sich jeder auf gegenüberliegenden Seiten der Öffnung erstrecken und einander nähern, während sie sich der Position der Öffnung (30) von beiden Seiten nähern.

7. Eine Anordnung wie in einem der vorstehenden Ansprüche beansprucht, einschließlich mindestens zweier auf durch Öffnungen (30) in der Platte hindurchreichenden Spindeln (32) montierter Zeiger, wobei jeder Zeiger Licht empfangende Flächen aufweist, die in Richtung der ersten Seite der Platte weisen und angepaßt sind um Licht zu empfangen, um den Zeiger zu beleuchten; worin Licht von einer einzelnen Lichtquelle in eine erste Richtung auf einen ersten Zeiger hin gelenkt wird, und in eine zweite Richtung auf einen zweiten Zeiger hin.

8. Eine Anordnung wie in einem der vorstehenden Ansprüche beansprucht, in der die aufeinander zulaufenden Facetten ein Paar von durch die Stärke der Platte (22) hindurch gebildeten Schlitzen (38) umfaßt, um Oberflächen zu bilden, an welchen innerhalb der Platte (22) laufendes Licht intern vollkommen innerhalb der Platte (22) reflektiert wird, und worin die Schlitze (38) relativ zu einem Punkt auf der Platte (22) gebogen sind, so daß von verschiedenen Teilen entlang der Länge der Schlitze reflektiertes Licht zu diesem Punkt gelenkt wird.

9. Eine Anordnung wie in Anspruch 8 beansprucht, in der die Schlitze (38) relativ zu einem Punkt auf der Platte angeordnet sind, so daß von unterschiedlichen Schlitzen oder von unterschiedlichen Teilen entlang der Länge eines Schlitzes reflektiertes Licht zu diesem Punkt gelenkt wird.

## Revendications

1. Un appareil d'affichage à guidage de lumière pour illuminer des indicateurs sur un panneau d'affichage, l'appareil comprenant une plaque translucide moulée (22) ayant un premier côté formant support pour le panneau d'affichage (28) et un deuxième côté, au moins un indicateur (20) couplé avec un arbre d'accouplement (32) passant au travers d'une ouverture (30) dans la plaque, l'indicateur comprenant des surfaces réceptrices de lumière faisant face au premier côté de la plaque et adaptées à recevoir de la lumière pour illuminer l'indicateur, les bords de l'ouverture comprenant des facettes obliques (34) configurées pour diriger la lumière dans les surfaces réceptrices de lumière de l'indicateur, et des moyens (46, 146, 246) à distance de l'ouverture pour introduire la lumière dans la plaque translucide (22), les moyens pour introduire la lumière comprenant des tubes lumineux (44) moulés sur le deuxième côté de la plaque translucide (22), au moins un des tubes lumineux comprenant des surfaces (146, 246) réceptrices de lumière sur plus d'un plan et des canaux de transmission de lumière sur plus d'un plan, la plaque (22) ayant au moins une paire de facettes convergentes (38) entre le premier côté et le deuxième côté, qui convergent vers l'ouverture (30) afin de concentrer la lumière incidente entre les facettes convergentes (38) vers l'ouverture, dans lequel les facettes convergentes (38) sont courbes avec leur côté concave faisant face l'un à l'autre.

2. Un appareil selon la revendication 1, dans lequel les facettes convergentes sont les bords de rainures (38) formées au travers du matériau de la plaque (22).

3. Un appareil selon la revendication 1, dans lequel les facettes convergentes (38) sont formées à l'intérieur du matériau de la plaque (22).

4. Un appareil selon l'une quelconque des revendications précédentes, dans lequel le premier côté de la plaque (22) est recouvert d'un habillage (28) comprenant certaines parties translucides et certaines parties opaques, et les facettes convergentes (38) sont toutes situées derrière les parties opaques de l'habillage.

5. Un appareil selon l'une quelconque des revendications précédentes, dans lequel deux paires de facettes convergentes (38) sont fournies, convergeant vers l'ouverture (30) à partir de différentes directions afin de concentrer la lumière vers l'ouverture à partir de deux sources de lumière différentes.

6. Un appareil selon la revendication 5, dans lequel les deux paires de facettes convergentes sont fournies par deux rainures (38), qui s'étendent chacune sur les côtés opposés de l'ouverture et se rapprochent l'une de l'autre alors qu'elles approchent la position de l'ouverture à partir de chaque côté.

7. Un appareil selon l'une quelconque des revendications précédentes, comprenant au moins deux indicateurs couplés avec des arbres d'accouplement (32) passant au travers d'ouvertures (30) dans la plaque, chaque indicateur comprenant des surfaces réceptrices de lumière faisant face au premier côté de la plaque et adaptées à recevoir de la lumière pour illuminer l'indicateur, dans lequel la lumière émise par une seule source de lumière est dirigée selon une première direction vers un premier indicateur et selon une deuxième direction vers un deuxième indicateur.

8. Un appareil selon l'une quelconque des revendications précédentes, dans lequel les facettes convergentes comprennent une paire de rainures (38) formées au travers de l'épaisseur de la plaque (22) pour former des surfaces, dans lesquelles la lumière passant au travers de la plaque (22) est totalement réfléchie à l'intérieur de la plaque (22), et dans lequel appareil les rainures (38) sont courbes par rapport à un point sur la plaque (22), de manière à ce que la lumière réfléchie en différents endroits le long des rainures soit dirigée vers ce point.

9. Un appareil selon la revendication 8, dans lequel les rainures (38) sont disposées par rapport à un point sur la plaque, de manière à ce que la lumière réfléchie par différentes rainures, ou en différents endroits le long d'une rainure, soit dirigée vers cet point.
